# EUROPEAN PATENT APPLICATION

(11) **EP 1 096 132 A2**
(43) Date of publication of application: **02.05.2001**
(21) Application number: 00309490.1
(22) Date of filing: 27.10.2000
(51) Int. Cl.: F02M 31/18

(54) **Improved fuel vaporizer method and apparatus**

(30) Priority: 28.10.1999 CA 2287546; 30.03.2000 US 539265
(71) Applicant: International Thermal Investments Ltd., Richmond, British Columbia V6X 2R2 (CA)
(72) Inventor: Fleming Leonard William,, British Columbia, V6X 2R2 (CA)
(74) Representative: Boden, Keith McMurray

(57) **Abstract**

A burner for a heater including an uptube for the vaporisation of fuel within and below the outlet thereof. The uptube is surrounded by a casing and heat transfer members extend between the casing and the uptube to transfer heat from the combustion area outside the casing to the uptube. A series of additional heat transfer members are mounted on the outside of the casing at intermittent locations along the uptube. The additional heat transfer members assist in gathering heat from the combustion area and transferring the same to the casing, thence to the heat transfer members between the casing and the uptube, and thence to the uptube. Such heat transfer raises the temperature of the uptube and assists in vaporising the fuel within the uptube.

## Description

This invention relates to an improved fuel vaporizer method and apparatus and, more particularly, to such an improved fuel vaporizer and apparatus which utilises increased heat transfer to assist in vaporizing the fuel.

A fuel vaporizer which utilises a fuel upflow tube surrounded concentrically by a casing which is connected to the vaporizer tube by a series of heat conducting members extending parallel to the longitudinal axis of the upflow tube and being located within the cylindrical recess between the uptube and the casing is known. Such a fuel vaporizer is disclosed in United States Patent 5,490,326. The level of the fuel within the uptube is regulated by an appropriate fuel regulator such that the upper surface of the fuel is somewhat below the uppermost end of the uptube. This fuel level regulation and uptube configuration results in heat generated from the combustion flame outside the casing to be transferred through the casing and longitudinal members to the uptube where the fuel is vaporized. The vapor travels downwardly from the outlet of the uptube within the casing until it is released and enters the combustion area. Such a configuration offers unique advantages, namely the elimination of heavy ends which can result in deposits eventually clogging the burner and the elimination of fuel overflow from the uptube which otherwise could result in unintended combustion.

The above-identified configuration works well in most situations but improvements are possible when the heater in which the uptube is located has a high and low heating configuration. In the high heat configuration, the combustion flame generally takes place in the upper regions of the heater outside the casing which is a relatively long distance from the superheater surrounding the casing. The heat transfer from the superheater to the casing and thence to the uptube for vaporisation purposes in such a high heat condition for the burner may be less than desirable for the total vaporization of the heavy ends within the fuel being vaporized.

According to one aspect of the invention, there is provided a burner comprising a fuel uptube having an inlet and an outlet, a fuel regulator for regulating the level of fuel within said uptube at a level which is below said outlet, a casing surrounding a substantial portion of the length of said burner uptube, a superheater extending outwardly from said casing in the lower area of said casing and at least one additional heat conducting member extending outwardly from said casing at a position above said superheater and being operable to transfer heat from a combustion area outside said casing to said uptube.

According to a further aspect of the invention, there is provided a method of vaporising fuel within a burner uptube having an inlet and an outlet comprising the steps of regulating the upper level of said fuel within said uptube to a position below said outlet, transferring heat from a casing surrounding said uptube to said uptube through at least one heat transferring member extending between said casing and said uptube and through a superheater extending outwardly from said casing and assisting said heat transfer by providing an additional heat transferring member extending outwardly of said casing at a position above said superheater.

A specific embodiment of the invention will now be described, by way of example only, with the use of drawings in which:
Figure 1 is a diagrammatic and partial sectional view of the burner according to the present invention and the regulator for regulating the level of fuel within the uptube of the burner; and
Figure 2 is a diagrammatic plan sectional view of the burner of Figure 1 taken along II-II of Figure 1.

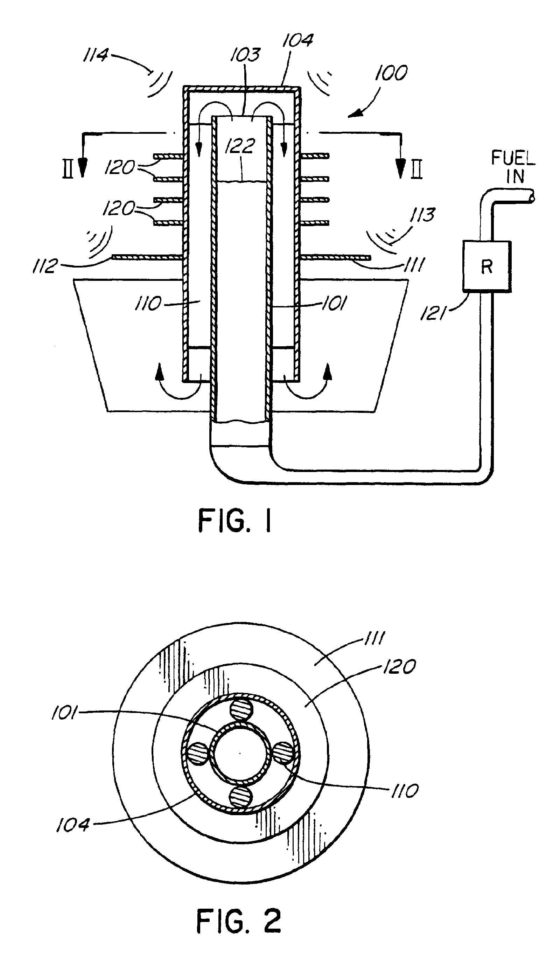

Referring now to the drawings, a burner for a heater is generally illustrated at 100 in Figure 1. It comprises an uptube 101 having an inlet 102 and an outlet 103 located at the upper end of the uptube 101. A casing 104 surrounds the uptube 101 and is held and mounted in position by a plurality of longitudinal members 110 which extend between the casing 104 and the uptube 101. The members 110 are metallic and are used for heat transfer as well as to hold the casing 104 in its correct position relative to the uptube 101. Generally, the members 104 are welded to the uptube 101 and the casing is then slidably mounted over the uptube 101 and the members 110.

A superheater 111 is mounted to the outside of the casing 104. The superheater 111 is round and has an outside diameter 112 which is relatively large compared to the outside diameter 112 of the casing 104. Superheater 111 is metallic and assists in transferring heat from the combustion areas 113, 114 to the uptube 101 through the members 110. The two combustion areas 113, 114 are distinguishable by the condition of the burner 100. In the low fire or low heat condition, the hottest area of the flame will generally be in the area 113. In the high fire or high heat condition, the hottest area of the flame will generally be in the area 114.

A series of heat conducting members 120 are mounted about the outside of the casing 104 above the superheater 111. These heat conducting members 120 are intermittently spaced and have an outside diameter which is smaller than that of superheater 111. The heat conducting members 120 assist in transferring heat from the combustion areas 113, 114 and, in particular, assist in transferring heat from combustion area 114 of the high flame condition, to the uptube 101.

In operation, fuel will be supplied to the uptube 101 by a fuel source (not shown) which passes fuel to the regulator 121. Regulator 121 may be a carburetor, zero pressure regulator or other fuel regulating device or the like which will maintain the upper level 122 of the fuel within the uptube 101 below the outlet 103 of the uptube 101; that is, when the fuel is vaporized within the uptube 101 thereby requiring more fuel within the uptube, the regulator 121 will supply the same and terminate flow to the uptube 101 when the appropriate fuel level is reached.

Combustion will be taking place outside the casing 104 and within the surrounding heater (not shown) in which the burner 100 is mounted. This combustion results in a flame extending between that of the low fire position 113 and that of the high fire position 114. In the example herein described, it will be assumed that the principal portion or hottest area of combustion is occurring at 114; that is, during the high fire condition.

The members 120 will transfer heat from the combustion areas 113, 114 to the outside of the casing 104. This heat will then be transferred from the casing 104 to the uptube 101 through the members 110 and will assist in vaporising the fuel within the uptube 101 by raising the temperature of the uptube 101. The superheater 112 also assists in transferring heat to the uptube 101 but the superheater 112 transfers more heat in the low flame position 113 than in the high flame position 114 thereby creating an additional need for heat transfer in the high flame position 114 to assist in completely vaporising the fuel in the uptube 101 and the heavy ends within the fuel. The members 120 assist in so raising the temperature of the uptube 101 and thereby increase the efficiency and temperature of combustion resulting in the complete vaporisation of the fuel and avoiding the deposit of the heavy ends which might otherwise occur.

While the uptube 101, casing 104, superheater 111 and members 120 are shown as being cylindrical when viewed in plan, it is clear that other configurations could also be used which would accomplish the objectives of the invention. Similarly, while four(4) such members 120 have been shown, the number and placement of such members could be varied to obtain the specific heat transfer characteristics sought to obtain the greatest temperature and/or combustion efficiency of the burner.

Many further modifications will readily occur to those skilled in the art to which the invention relates and the specific embodiment described should be taken as illustrative of the invention only and not as limiting its scope as defined in accordance with the accompanying claims.

## Claims

1. A burner comprising a fuel uptube having an inlet and an outlet, a fuel regulator for regulating the level of fuel within said uptube at a level which is below said outlet, a casing surrounding a substantial portion of the length of said burner uptube, a superheater extending outwardly from said casing in the lower area of said casing and at least one additional heat conducting member extending outwardly from said casing at a position above said superheater and being operable to transfer heat from a combustion area outside said casing to said uptube.

2. A method of vaporising fuel within a burner uptube having an inlet and an outlet comprising the steps of regulating the upper level of said fuel within said uptube to a position below said outlet, transferring heat from a casing surrounding said uptube to said uptube through at least one heat transferring member extending between said casing and said uptube and through a superheater extending outwardly from said casing and assisting said heat transfer by providing an additional heat transferring member extending outwardly of said casing at a position above said superheater.
